(19) Europäisches Patentamt
European Patent Office
Office européen des brevets

(11) Veröffentlichungsnummer: **0 080 614**
**B1**

(12) # EUROPÄISCHE PATENTSCHRIFT

(45) Veröffentlichungstag der Patentschrift: **15.04.87**

(21) Anmeldenummer: **82110273.8**

(22) Anmeldetag: **08.11.82**

(51) Int. Cl.[4]: **C 08 F 291/00,** G 01 N 33/53, C 08 F 257/02 // (C08F291/00, 220:54)

(54) **Ein Latex, biologisch aktive Latexkonjugate und Verfahren zu ihrer Herstellung.**

(30) Priorität: **13.11.81 DE 3145082**

(43) Veröffentlichungstag der Anmeldung:
**08.06.83 Patentblatt 83/23**

(45) Bekanntmachung des Hinweises auf die Patenterteilung:
**15.04.87 Patentblatt 87/16**

(84) Benannte Vertragsstaaten:
**AT BE CH DE FR GB IT LI LU NL SE**

(56) Entgegenhaltungen:
**EP-A-0 019 741**
**FR-A-2 332 287**

(73) Patentinhaber: **BEHRINGWERKE AKTIENGESELLSCHAFT**
**Postfach 1140**
**D-3550 Marburg/Lahn (DE)**

(72) Erfinder: **Pauly, Hans-Erwin, Dr.**
**Finkenstrasse 1**
**D-3563 Dautphetal (DE)**
Erfinder: **Kapmeyer, Wolfgang, Dr.**
**Reinhardswaldstrasse 5**
**D-3550 Marburg/Lahn (DE)**
Erfinder: **Seitz, Ulrich, Dr.**
**Erlenweg 2**
**D-7250 Leonberg (DE)**

(74) Vertreter: **Meyer-Dulheuer, Karl-Hermann, Dr. et al**
**HOECHST Aktiengesellschaft Zentrale**
**Patentabteilung Postfach 80 03 20**
**D-6230 Frankfurt/Main 80 (DE)**

**EP 0 080 614 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Herstellung eines Latex sowie von biologisch aktiven Latespartikeln durch kovalente Kopplung von niedermolekularen oder hochmolekularen biologisch aktiven Substanzen, die über freie Aminogruppen verfügen, an reaktive von der Aldehydfunktion abgeleitete Gruppen auf der Oberfläche von Latices. Diese biologisch aktiven Latexkonjugate sind vor allem geeignet für serologische oder Immunologische Bestimmungsverfahren.

Es ist bekannt, die Empfindlichkeit solcher Bestimmungsverfahren durch die Verwendung von Indikator- oder Trägerteilchen zu erhöhen, die mit dem entsprechenden immunologischen Reagenz beladen sind. Neben biologischem Trägermaterial, wie rote Blutkörperchen oder Zellen einer Zellkultur, werden vornehmlich Latexpartikel mit einem Durchmesser von 0.03—5 µm verwendet. Trotz seiner verbreiteten Verwendung hat das Latex-Testverfahren bisher vor ellem die Nachteile, daß beladene Latexteilchen unspezifisch miteinander reagieren, daß die immunologischen Reagenzien durch den Kontakt mit der Oberfläche der Latexpartikel ihre biologische Aktivität verlieren oder daß diese von den Partikeln desorbiert werden können.

Es hat sich gezeigt, daß die chemische Bindung des immunologischen Reagenzes an den Träger der zuvor benutzten physikalischen Oberflächenadsorption überlegen ist.

Bisher wurden zur Verknüpfung von Träger und immunologisch aktivem Material einerseits Verfahren angewandt, die ein bifunktionelles, Kopplungsmittel erfordern, das reaktive Gruppen des Proteins mit denen der Trägerpartikel verknüpft. Nachteil dieser Methode ist, daß als Nebenreaktion eine unerwünschte Vernetzung der eingesetzten immunologisch aktiven Materialien eintreten kann, und diese dadurch inaktiviert werden oder für die Kopplung mit dem Träger verlorengehen.

Weiterhin sind Verfahren bekannt, bei denen die Verknüpfung mittels einpolymerisierter oberflächiger Epoxydgruppen oder diazotierbarer aromatischer Aminoverbindungen erfolgt. Generell haben diese Verfahren den Nachteil, daß diese reaktiven Gruppen des Latex mit zahlreichen funktionellen Gruppen von immunologisch aktiven Materialien reagieren können. Dadurch kann es zu unerwünschten Bindungen kommen, die die Reaktivität des immunologisch aktiven Materials durch sterische Einflüsse oder durch Konformationsänderungen zerstören. Ein weiterer Nachteil besteht darin, daß diese bindungsfähigen Gruppen labil sind, weil die Epoxyde beispielsweise durch Hydrolyse zersetzt werden, so daß solche aktiven Latexpartikel nicht längere Zeit aufbewahrt werden können.

Es bestand also ein Bedürfnis nach einem Träger, der einfach herzustellen und schonend mit auch empfindlichen immunologisch aktiven Materialien zu einem diagnostisch brauchbaren Reagenz zu verknüpfen ist. Die Reaktionsfähigkeit des gebundenen Materials soll lange erhalten bleiben. Das Reagenz soll spezifisch und empfindlich reagieren.

Es wurde nun überraschend gefunden, daß für den genannten Zweck geeignete Träger erhalten werden, wenn in einem wässrigen Medium vorgefertigte Latexkerne mit Vinylmonomeren, die über Säureamidgruppen gebundene Acetalfunktionen enthalten, angequollen und diese Vinylmonomere, die ausreichend wasserunlöslich sein müssen, zusammen mit weiteren Monomeren, die hydrophiler oder ionischer Natur sein können, copolymerisiert werden. Als initiatoren der Radikalkettenpolymerisation können sowohl öl-lösliche als auch wasserlösliche sowie wasserunlösliche Radikalbildner Verwendung finden. Besonders brauchbare hydrophile Comonomere sind Methacryl- oder Acrylsäure oder Methacryl- oder Acrylamidderivate.

Die Verwendbarkeit hydrophiler Monomerer ist von besonderer Bedeutung für die Stabilität der gebundenen immunologisch aktiven Materialien, de empfindliche Proteine beispielsweise durch hydrophobe Oberflächen in ihrer Konformation geändert und inaktiviert werden können. Partikel mit hydrophiler Oberfläche sind auch deshalb vorzuziehen, weil sie weniger unspezifische Wechselwirkungen miteinander eingehen. Diese sind eine wesentliche Ursache für falsche Testergebnisse.

Weiterhin bezieht sich die Erfindung auf ein Verfahren zur Herstellung von biologisch aktiven Latexkonjugaten, in dem Aminogruppen der zu bindenden Substanzen mit Aldehydgruppen auf der Oberfläche der Latexpartikel nach dem Prinzip der reduktiven Aminierung verknüpft werden. Diese Aldehydgruppen können aus Acetalgruppen durch ein kurzes Ansäuern erzeugt werden. Dies hat den Vorteil, daß Aldehydgruppen-tragende Latexpartikel unbeladen in Form der stabilen Acetale gelagert werden können und ohne ein Kopplungsmittel in eine bindungsaktive Form überführt werden können. Weiterhin ermöglicht die reduktive Aminierung eine sehr schonende Bindung von biologisch aktiven Substanzen, da selektiv nur deren Aminogruppen gebunden werden, die beispielsweise in Proteinen in großer Zahl verfügbar sind und bei dieser Verknüpfungsmethode ihre native Ladungsform beibehalten. Im Vergleich zu anderen Methoden ist diese Methode auch besonders schonend, weil die chemische Bindung schnell und bei einem physiologischen pH-Wert erfolgt.

Gegenstand der Erfindung ist demnach ein neuartiger Latex, der mit einer oberflächlichen Schicht eines Copolymerisats überzogen ist, in dem Gruppen mit endständigen Acetalen der Formel I

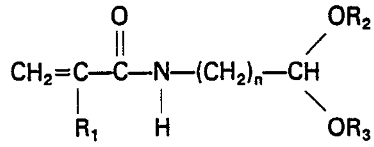

I

worin n=1—6;
$R_1$=H, $CH_3$; und
$R_2$ und $R_3$=$C_2$—$C_6$-Alkyl oder Aryl, bedeuten,

enthalten sind.

Solche Latices können durch Pfropfcopolymerisation auf üblichen herkömmlichen Latexpartikeln hergestellt werden, die mittels bekannter Verfahren als Homo- oder Copolymerisate von Monomeren erhalten werden können, wie sie beispielsweise in der DE—OS—29 07 794 beschrieben sind.

Bevorzugte Monomere für die Pfropfcopolymerisation zur Herstellung der Oberflächenschicht auf den Latexpartikeln sind Gemische aus einem oder mehreren der für die Kernherstellung benutzten Monomeren und weiteren copolymerisierbaren äthylenisch ungesättigten Verbindungen mit endständigen Acetalgruppen. Diese können Derivate der (Meth)-acrylsäure der Formel 1 sein, jedoch erscheinen auch andere Acetalgruppen enthaltende Monomere geeignet, sofern sie hinreichend wasserunlöslich sind, dann sonst würde statt einer Pfropfung auf den Polystyrol-Latex eine Polymerisation in der wässrigen Phase erfolgen.

Als weitere Zusätze können hydrophile Monomere verwendet werden (z.B. Hydroxyethylacrylamid und andere hydroxylgruppenhaltige Monomere). Besonders vorteilhaft ist die Verwendung von kleinen Mengen ionischer Comonomerer wie beispielsweise Acrylsäure, Methacrylsäure oder Acrylamidopropansulfonsäure als anionische Monomere oder 4-Vinylpyridin oder Methacrylamidopropyltrimethylammoniumchlorid als kationische Monomere. Diese tragen in erheblichem Umfang zur Stabilisierung des Latex bei.

Durch einfache Änderung des Mischungsverhältnisses der aufzupropfenden Monomeren läßt sich die Pfropfschicht den Bedingungen für eine optimale Bindung und Stabilität des jeweils eingesetzten immunologisch aktiven Materials gezielt anpassen.

Für den Aufbau der Pfropfschicht und die Dauerhaftigkeit der Träger-Reagenz -Bindung ist von großer Bedeutung, daß die polymerisierende Vinylgruppe mit dem jeweiligen funktionellen Ende des Moleküls über eine Säureamid-Bindung verknüpft ist. Zwar läßt sich eine Aufpfropfung der geschilderten Art auch mit Monomeren durchführen, die Ester- statt Säureamidbindungen enthalten, beispielsweise (Meth)Acrylsäureethylesterdi-n-pentylacetal oder Hydroxyethyl(meth)acrylat. Die Estergruppe kann jedoch bei allen pH-Werten kleiner oder größer als pH 7, wie sie bei der Aktivierung, Kopplung oder Lagerung der Latices auftreten können, wesentlich leichter hydrolytisch gespalten werden als ein entsprechendes Acrylamid- oder Methacrylamid-Derivat.

Zur Herstellung des erfindungsgemäßen modifizierten Polystyrol-Latex wird generell ein vorgefertigter Polystyrol-Latex beliebigen Partikel-Durchmessers mit etwa 40—70% der Menge eines Emulgators versetzt, die zur maximalen Bedeckung seiner Oberfläche notwendig wäre, anschließend die Mischung der Pfropfmonomeren zugegeben, der Latex gequollen und polymerisiert.

Zur Herstellung eines erfindungsgemäßen Latexkonjugats wird eine Suspension der oben beschriebenen pfropfpolymerisierten Latexpartikel durch Zugabe von Säure auf einen pH-Wert von unter 2 eingestellt, inkubiert und nach der Neutralisation mit dem zu bindenden immunologisch aktiven Material in Gegenwert eines geeigneten Reduktionsmittels inkubiert. Bevorzugt wird zur Reduktion eine Lösung von Natriumcyanoborhydrid in neutralem Puffer eingesetzt.

Nach der Bindungsreaktion kann es zweckmäßig sein, überschüssige Aldehydgruppen durch Zusatz einer Verbindung mit freien Aminogruppen, vorzugsweise in einem Puffer, zu "versiegeln".

Für manche Anwendungen ist die Abtrennung von eventuell ungebundenem immunologisch aktiven Material oder anderen Verunreinigungen aus dem Reaktionsansatz durch Zentrifugation oder Waschen auf geeigneten Membranen angebracht.

Die Latexkonjugate können in verschiedenen diagnostischen Verfahren eingesetzt werden, beispielsweise in qualitativen und semiquantitativen Bestimmungen von Substanzen mit Hilfe von Latexagglutinationstesten, beispielsweise auf Glasträgern, zur nephelometrischen oder turbidimetrischen Bestimmung von Spurenproteinen im direkten oder kompetitiven Agglutinationstest oder im Latex-Hapteninhibitions-Test.

Beispiel 1

Herstellung von Methacrylamido-acetaldehyddi-n-pentylacetal (1)

Aminoacetataldehyddi-n-pentylacetal wird durch Transacetatalisierung von Aminoacetaldehyddimethylacetal mit Pentanol der allgemeinen Vorschrift von Juret und Chin in J. Am. Chem. Soc. 83, 1560 (1961) folgend hergestellt.

Das Monomer (1) wird durch Umsetzung von Methacrylsäurechlorid und Aminoacetalaldehyddi-n-pentylacetal in wasserfreier Lösung hergestellt.

Dazu werden 7,2 g Aminoacetaldehyddi-n-pentylacetal ($3{,}3 \cdot 10^{-2}$ mol) und 9,1 g $K_2CO_3$ ($6{,}6 \cdot 10^{-2}$ mol)

unter Stickstoff in 20 ml wasserfreiem Chloroform vorgelegt und auf 0°C abgekühlt. Dazu werden unter Rühren innerhalb von 30 Minuten 3,4 g Methacrylsäurechlorid ($3{,}3 \cdot 10^{-2}$ mol), in 20 ml Chloroform gelöst, zugetropft. Nach insgesamt 90 Minuten läßt man langsam auf Zimmertemperatur aufwärmen.

Die Reaktionsmischung wird mit Wasser versetzt, die Chloroformphase abgetrennt, getrocknet und bei Zimmertemperatur im Vakuum das Produkt (I) vom Lösungsmittel befreit. Es handelt sich um 6.0 g eines gelblichen, viskosen Öls (Ausbeute 64%), des nicht destilliert werden kann, da es bei erhöhter Temperatur rasch polymerisiert.

Beispiel 2

a) Pfropfcopolymerisation von (1) auf Polystyrollatices mit wasserunlöslichem Radikalbildner

47 ml eines seifenfreien Polystyrollatex (entspricht 4 g Festsubstanz) mit einem mittleren Partikeldurchmesser von 196 nm werden zusammen mit 0.0486 g Natriumdodecylsulfat, 33 ml $H_2O$, 0.66 g Methacrylamidoacetaldehyddi-n-pentylacetal, 0.33 g Methacrylsäure und 0.01 g Azo-bis-isobutyronitril in ein Reaktionsgefäß eingebracht. Die Mischung wird mehrmals vorsichtig evakuiert und mit Stickstoff belüftet. Man läßt diese Mischung unter Rühren bei Raumtemperatur eine Stunde emulgieren und polymerisiert anschließend 5 Stunden bei 70°C.

Der abgekühlte Latex wird durch Ultrafiltration gereinigt. Der Carboxylgruppengehalt (durch potentiometrische Titration) beträgt 0.23 mval COOH/g Polymer, der Gehalt an Aldehydgruppen (nach Säurespaltung der Acetale und Titration mit Hydroxylamin) beträgt 0.13 mval Aldehyd/g Polymer.

b) Pfropfcopolymerisation von (1) auf Polystyrollatices mit wasserlöslichem Radikalbildner

47 ml eines seifenfreien Polystyrollatex (entsprechend 4 g Festsubstanz) mit einem mittleren Partikeldurchmesser von 196 nm werden Zusammen mit 0.0486 g Natriumdodecylsulfat, 32 ml $H_2O$, 0.4 g Methacrylamidoacetaldehyddi-n-pentylacetal, 0.4 g Styrol und 0.2 g Methacrylsäure in ein Reaktionsgefäß gegeben. Die Mischung wird mehrmals vorsichtig evakuiert und mit Stickstoff belüftet. Man läßt diese Mischung bei Raumtemperatur 1 Stunde emulgieren, anschließend wird auf 70°C aufgewärmt, nach weiteren 15 Minuten Rühren wird die Copolymerisation gestartet durch Einspritzen von 0.016 g Kalium-peroxodisulfat, gelöst in 1 ml Wasser. Die Polymerisation läuft 5 Stunden bei 70°C. Der abgekühlte Latex wird durch Ultrafiltration gereinigt. Der Carboxylgruppengehalt beträgt 0.1 mval/g, der Gehalt an Aldehydgruppen ebenfalls 0.1 mval/g, der neue mittlere Partikeldurchmesser beträgt 207 nm.

Beispiel 3

Kompetitiver lasernephelometrischer Test zum Nachweis von BSP1-Glykoprotein

a) Herstellung von BSP1-Latexkonjugat:

Zur Latexaktivierung werden 3 ml einer 5 %igen Latexsuspension aus Beispiel 2 b mit 300 µl 1nHCl und 300 µl einer 20 %igen Tween(R)20-Lösung 1 Stunde bei Raumtemperatur inkubiert. Dann wird durch Zusatz von 250 µl 1 n NaOH und gesättigter Dinatriumhydrogenphosphat-Lösung der pH auf 6,5 eingestellt. Damit werden 1,5 ml einer 1 mg/ml-Lösung βSP1-Glykoprotein und 1 mg/ml humanes Serumalbumin in physiologischer Kochsalzlösung (PBS) sowie 1,5 ml einer 0,5 %igen Lösung von Natriumcyanoborhydrid in phosphatgepufferter Kochsalzlösung über Nacht bei +4°C inkubiert. Zum Versiegeln der überschüssigen Aldehydgruppen werden 1,2 ml einer 0,5 molaren Äthanolaminhydrochlorid-Lösung (pH 8,5) und 0,3 ml einer 2,5 %igen Natriumborhydrid-Lösung zugegeben und der Ansatz 1 Stunde bei +4°C inkubiert. Anschließend wird das βSP1-Latexkonjugat abzentrifugiert und der Niederschlag in 3 ml PBS mit 0,2% Tween(R)20 aufgenommen.

b) Testdurchführung:

Serumproben werden 1:5 in PBS mit 1,7% Tween(R)20 vorverdünnt. Als Standard wird βSP1-Glykoprotein (Behringwerke AG), 1:5 verdünnt in PBS mit 1,7% Tween 20 sowie 20% Humanserum von männlichen Spendern, eingesetzt. Zur Messung werden 100 µl der verdünnten Probe bzw. des Standards, 100 µl eines Antiserums vom Kaninschen genen Human-βSP1-Glykoprotein (1:3200 in 0,1 molar Glycinpuffer pH 8,2 mit 1% NaCl verdünnt) und 200 µl eines in PBS mit 1,7% Tween(R)20 1:100 verdünnten Latex-Reagenzes in der Küvette gemischt. Der Ansatz wird 3 Stunden bei Raumtemperatur inkubiert und anschließend im Lasernephelometer (Behringwerke AG) gemessen. Die für die unbekennten Proben gemessenen Streulichtsignale werden anhand einer Referenzkurve augewertet, die mit Hilfe der Standardverdünnungen erstellt worden war. Der Meßbereich reicht von ca. 2,5 µm/ml bis 50 ng/ml βSP1-Glykoprotein.

Beispiel 4

Direkte nephelometrische Bestimmung von Tetanustoxoidspezifischen Antikörpern

Die Herstellung von Tetanustoxoid-Latexkonjugaten wird analog zu Beispiel 3 durchgeführt, ausgehend von 3 ml einer 5 %igen Latexsuspension und 1,5 ml einer Tetanustoxoid-Lösung mit ca. 3000 Lf/ml. Auf diese Weise werden 3 ml eines Tetanustoxoid-Latexkonjugats erhalten. Als Standard wird ein Human-Gammaglobulinpool (160 mg/ml) mit ca. 20 IE/ml Tetanustoxoid-spezifischer Antikörper-Aktivität (Beriglobin(R), Behringwerke AG) in den Verdünnungen von 1:80—1:5120 in 0,1 molar Glycinpuffer pH 8,2 mit 1% Kochsalz eingesetzt.

Vor der Messung werden Patientenseren 1:100 bzw. 1:20 in 0,1 molarem Glycinpuffer pH 8,2 mit 1% NaCl verdünnt. Zum Testansatz werden 100 µl verdünnte Probe bzw. Standard zu 200 µl der 1:25 in PBS mit 0,2% Tween 20 verdünnter Latexkonjugat-Suspension in der Küvette gemischt. Nach 2 Stunden wird am Laser-Photometer des Streulichtsignal ermittelt und die Auswertung anhand der für die Standardverdünnungen erstellten Referenzkurve vorgenommen.

Beispiel 5

Haptennachweis durch Latex-Agglutinationsinhibition

Die Herstellung von Epsilon-Dinitrophenyl-L-Lysin-Latex-Konjugaten wird analog zu Beispiel 3 durchgeführt, ausgehend von 3 ml einer 5 %igen Latexsuspension und 1.5 ml einer 0.66 %igen Lösung von Epsilon-Dinitrophenyl-L-Lysin (DNP-Lys) der Fa. SERVA, Heidelberg. Nach dem Blockieren der überschüssigen Aldehydgruppen wurde das Hapten-Latex-Konjugat (DNP-Latex) abzentrifugiert, mit 10 ml PBS mit 0.2% Tween(R)-20 resuspendiert und nach erneutem Abzentrifugieren in 3 ml PBS mit 0.2% Tween(R)-20 aufgenommen.

Die DNP-Latex-Suspension wird mit in der Ziege gewonnenem Antiserum gegen den Dinitrophenylrest (Fa. Paesel, Frankfurt) auf den Reaktionsfeldern von Latex-Testplatten der Behringwerde AG vermischt und ergibt in geeigneter Verdünnung eine Agglutination, deren Reaktionsstärke nach den üblichen Kriterien visuell als 4+beurteilt werden kann. Wie in Tabelle 1 gezeigt, läßt sich die Agglutinationsreaktion durch Zugabe des Haptens (DNP) hemmen. Dies kann zum Nachweis des Haptens in einer Probenflüssigkeit verwendet werden.

TABELLE 1

Konzentration von DNP-Lys in der zugesetzten Probenflüssigkeit (PBS) in µg/ml

| | 0 | 0.5 | 1 | 2 | 10 |
|---|---|---|---|---|---|
| Reaktions-stärke der Agglutination | 4+ | 2—3+ | 1—2+ | 0 | 0 |

**Patentansprüche**

1. Ein Latex, dadurch gekennzeichnet, daß er aus einem Kern aus einem bekannten Latex und einer Schale aus einem Copolymeren aus einem oder mehreren ethylenisch ungesättigten Monomeren und einem Monomer der Formel 1

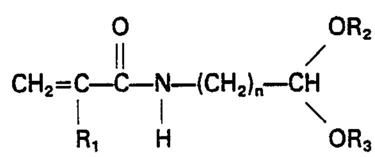

I

worin n=1—6;

$R_1$=H, $CH_3$; und

$R_2$ und $R_3$=$C_2$—$C_6$-Alkyl oder Aryl bedeuten,

besteht.

2. Ein Verfahren zur Herstellung eines Latex nach Anspruch 1, dadurch gekennzeichnet, daß man einen bekannten Latex mit einem Monomer der Formel I und einem oder mehreren ethylenisch ungesättigten Monomeren und einem Detergenz mischt und die Polymerisation durch Zugabe eines Radikalbildners auslöst.

3. Ein Latex nach Anspruch 1, dadurch gekennzeichnet, daß der Kern aus Polystyrol und die Schale aus einem Copolymerisat aus Methacrylamidoacetaldehyddi-n-pentylacetal, Methacrylsäure und gegebenenfalls welteren ethylenisch ungesättigten Monomeren besteht.

4. Ein Latex-Konjugat, dadurch gekennzeichnet, daß eine biologisch aktive Substanz an ein Latex nach Anspruch 1 oder 3 kovalent gebunden ist.

5. Verwendung eines Latexkonjugates nach Anspruch 4 zum diagnostischen Nachweis einges Antigens, Antikörpers oder Haptens.

**Revendications**

1. Latex caractérisé en ce qu'il est constitué d'un noyau fait d'un latex connu et d'une enveloppe qui est un copolymère d'un ou de plusieurs monomères à insaturation ethylénique et d'un monomère de formule I.

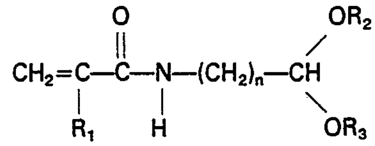 I

dans laquelle

n=1 à 6;

$R_1$ représente H, $CH_3$;

$R_2$ et $R_3$ représentent un groupe alkyle en $C_2$—$C_6$ ou un groupe aryle.

2. Procédé pour la préparation d'un latex selon la revendication 1, caractérisé en ce qu'on mélange un latex connu avec un monomère de formule I et un ou plusieurs monomères à insaturation éthylénique et avec un détergent et on effectue le polymérisation par addition d'un agent de formation de radicaux.

3. Latex selon la revendication 1, caractérisé en ce que le noyau est un polystyrène et l'enveloppe est constituée d'un copolymère de méthacrylamidoacétaldéhyde di-n-pentylacétal, d'acide méthacrylique et éventuellement d'autres monomères à insaturation éthylénique.

4. Conjugat de latex, caractérisé en ce qu'une substance biologiquement active est fixée de manière covalente sur un latex selon l'une des revendications 1 et 3.

5. Utilisation d'un conjugat de latex selon la revendication 4 pour une détection diagnostique d'un antigène, d'un anticorps ou d'un haptène.

**Claims**

1. A latex composed of a core of a known latex and a shell of a copolymer of one or more ethylenic unsaturated monomers and a monomer of the formula I

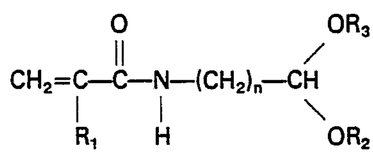 I

wherein n denotes 1—6;

$R_1$ denotes H or $CH_3$; and

$R_3$ and $R_2$ denotes $C_2$—$C_6$-alkyl or aryl.

2. A process for the preparation of a latex as claimed in claim 1, wherein a known latex is mixed with a monomer of the formula I and one or more ethylenic unsaturated monomers and a detergent and polymerization is initiated by addition of a radical producer.

3. A latex as claimed in claim 1, wherein the core comprises polystyrene and the shell comprises a copolymer of methacrylamidoacetaldehyde di-n-pentyl acetal, methacrylic acid and optionally other ethylenic unsaturated monomers.

4. A latex conjugate wherein a biologically active substance is covalently bonded to a latex as claimed in claim 1 or 3.

5. The use of a latex conjugate as claimed in claim 4 for the diagnostic determination of an antigen, antibody or hapten.